# EUROPEAN PATENT SPECIFICATION

(11) **EP 2 709 020 B1**
(45) Date of publication and mention of the grant of the patent: **15.01.2020**
(21) Application number: 13275217.1
(22) Date of filing: 16.09.2013
(51) Int. Cl.: G06F 13/16

(54) **System and method to arbitrate access to memory**
System und Verfahren für vermittelten Zugriff auf Speicher
Système et procédé pour arbitrer l'accès à une mémoire

(30) Priority: 17.09.2012 US 201213621308
(43) Date of publication of application: 19.03.2014
(73) Proprietor: Mobileye Vision Technologies Ltd., Jerusalem 9777513 (IL)
(72) Inventor: Kreinin, Yosef, 93585 Jerusalem (IL); Arbeli, Yosi, 75320 Rishon Le-Zion (IL)
(74) Representative: Jehan, Robert

(56) References cited:
- EP-A1- 0 550 224
- US-A- 5 524 235
- US-A- 5 781 927
- US-A1- 2011 022 756

## Description

### TECHNICAL FIELD

The present invention relates to computer architecture and specifically to prioritizing access to memory.

### BACKGROUND

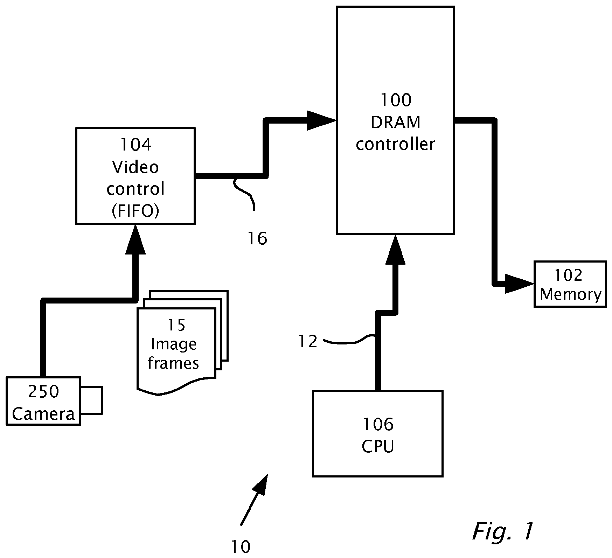

Reference is now made to Figure 1 which illustrates a system **10** for arbitrating memory access between a central processing unit CPU **106** and a peripheral device, *e.g.* video controller **104** to main memory **102.** Other examples of peripheral device **104** may include a gaming interface, video display and a sound interface card. In system **10,** video control unit receives image frames **15** in real time from camera **250.** Video control unit **104** may contain one or more temporary data storage buffers (labeled FIFO for first in first out). During a memory write operation data is transferred from FIFO data buffer and transferred to dynamic random access memory (DRAM) controller **100** on data line **16.** DRAM controller **100** may receive data from central processing unit (CPU) **106** on data line **12.**

Writing to memory **102** by video controller **104** or CPU **106** is prioritized by DRAM controller **100** based on priority levels supplied respectively to DRAM controller **100.**

Some examples of peripheral devices **104** and/or CPU **106** may set their own priority level. Otherwise, the priority levels may be set externally to peripheral device **104**, CPU **106** and DRAM controller **100.** Priority levels for a DRAM controller **100** may be 2 bits, giving four possible priority levels (0-3) from either video controller **104** or CPU **106.** Normally, CPU **106** is given the highest priority for memory access because while waiting for data, CPU **106** completely stops. Normally, video controller **104** does not require the highest priority because image frames **15** are temporarily stored in data buffer FIFO. However, when video controller **104** and CPU **106** have the same level of highest priority (3), a loss of an image frame **15** may occur if CPU **106** is still accessing memory **102** when write buffer FIFO overflows. Loss of an image frame **15** may be unacceptable for instance in camera based driver assistance systems and other real time, *e.g.* video, digital processing systems.

CPU **106**, peripheral device **104** and DRAM controller **100** may be "off-the-shelf" components. Under normal circumstances it may be that neither CPU **106** nor peripheral device **104** are available with priority level generation logic, because arbitration with priority may not be included in standard bus protocols. CPU **106** is not configured to receive a signal from peripheral device **104** and or otherwise change CPU priority status for memory access based on immediate requirement of peripheral device **104.**

Thus, there is a need for and it would be advantageous to have a system and method for preventing data loss in the event that peripheral device, e.g. video controller **104** does not receive timely access to memory **102.**

US-2011/022756 discloses a digital processor which has a default bus master having a highest priority in a default mode, a plurality of secondary bus masters having associated priorities, wherein the plurality of secondary bus masters have a predetermined priority relationship to each other, and a data space arbiter. The data space arbiter is programmable in a non-default mode to raise a priority of any of the secondary bus masters to have a priority higher than the priority of the default bus master while maintaining the predetermined priority relationship to only those secondary bus masters for which the priority level also has been raised above the priority of the default bus master.

US-5,781,927 discloses a main memory arbitration arrangement for a computer system, which features the ability to set priorities between a main system and peripheral system to optimize system efficiency. The arbitration arrangement comprises a main memory controller and a peripheral system. The main memory controller has ports for issuing memory request signals of various priority levels determined based on urgency of the need for the main memory. The main memory controller will determine whether to yield the control of the main memory to the peripheral system based on the priority level of the memory request signal received and the urgency of the current operating condition of the main system.

### BRIEF SUMMARY

The present invention seeks to provide an improved method and system for arbitrating memory access.

According to an aspect of the present invention, there is provided a system for arbitrating memory access as specified in claim 1.

According to another aspect of the present invention, there is provided a method of arbitrating memory access between a central processing unit CPU and between a central processing unit CPU as specified in claim 13.

Various systems are disclosed herein which include a central processing unit (CPU), a peripheral device connected to a memory controller configured to control a main memory. Access to and from the main memory by the CPU and access to and from the main memory by the peripheral device is prioritized respectively according to a CPU priority level and a peripheral device priority level. An arbitration module is operatively attached to: the CPU, the peripheral device and to the memory controller. The arbitration module is configured to receive the peripheral device priority level. When the CPU priority level and the peripheral device priority level are both set at the highest available priority level, the arbitration module is configured to output to the memory controller a new CPU priority level less than the highest available priority level.

The arbitration module may be configured to receive the CPU priority level. When the CPU priority level and the peripheral device priority level are set at different priority levels, the arbitration module is configured to output to the memory controller the new CPU priority level equal to the CPU priority level as received.

The CPU priority level may be a predetermined constant value equal to the highest available priority level. The CPU priority level may be set by the CPU or a device external to the CPU. The peripheral device priority level may be set by the peripheral device or may be set by a device external to the peripheral device.

The peripheral device may be a video controller able to write streaming image data into the main memory. The video controller may include a write buffer for temporary storage of the image data prior to writing the image data into the main memory. The video controller sets and outputs to the arbitration module the highest available priority level when the write buffer is substantially full. The video controller sets and outputs to the arbitration module a priority level less than the highest available priority level when the write buffer is less than substantially full. Accordingly, the priority level for the peripheral device may be set at a value proportional to the fullness of the write buffer.

The peripheral device may a video controller able to read streaming image data from the main memory. The video controller may include a read buffer for temporary storage of the image data prior to outputting the image data read from the main memory. The video controller sets and outputs to the arbitration module the highest available priority level when read buffer is substantially empty. The video controller sets and outputs to the arbitration module a priority level less than the highest available priority level when the read buffer is not substantially empty.

Accordingly, the priority level for the peripheral device may be set at a value proportional to the emptiness of the read buffer.

Various methods are disclosed for arbitrating memory access between a central processing unit CPU and a peripheral device to main memory.

The memory access to and from the main memory by the CPU and memory access to and from the main memory by the peripheral device is prioritized respectively according to a CPU priority level and a peripheral device priority level. An arbitration module is provided externally to the CPU, to the peripheral device and to the memory controller. The arbitration module receives the peripheral device priority level from the peripheral device. When the CPU priority level and the peripheral device priority level are both set at the highest available priority level, the arbitration module outputs to the memory controller a new CPU priority level less than the highest available priority level. The CPU priority level may be set by either said CPU or a device external to said CPU. The peripheral device priority level may be set by the peripheral device.

The foregoing and/or other features are described in further detail below in conjunction with the accompanying drawings.

### BRIEF DESCRIPTION OF THE DRAWINGS

Embodiments of the present invention are described below, by way of example only, with reference to the accompanying drawings, wherein:
Figure 1 illustrates a system for arbitrating memory access between a central processing unit CPU and a peripheral device to main memory.
Figure 2 illustrates another system for arbitrating memory access to a main memory, according to an embodiment of the present invention.
Figure 3 illustrates yet another system for arbitrating memory access to main memory, according to an embodiment of the present invention.
Figure 4 shows more details of an arbitration module, according to an embodiment of the present invention.
Figure 5 which shows a method, according to an embodiment of the present invention.

### DETAILED DESCRIPTION

Reference will now be made in detail to features of the preferred embodiments, examples of which are illustrated in the accompanying drawings, wherein like reference numerals refer to the like elements throughout.

Before explaining features of the preferred embodiments in detail, it is to be understood that the invention is not limited in its application to the details of design and the arrangement of the components set forth in the following description or illustrated in the drawings. The invention is capable of other features or of being practiced or carried out in various ways. Also, it is to be understood that the phraseology and terminology employed herein is for the purpose of description and should not be regarded as limiting.

By way of introduction, embodiments of the present invention are directed to arbitrating memory access between a central processing unit CPU and a peripheral device to and from a main memory. According to embodiments of the present invention, an arbitration module may be configured to output to the main memory controller a new and/or modified CPU priority level which is less than the highest available priority level so that data from the peripheral device is not lost.

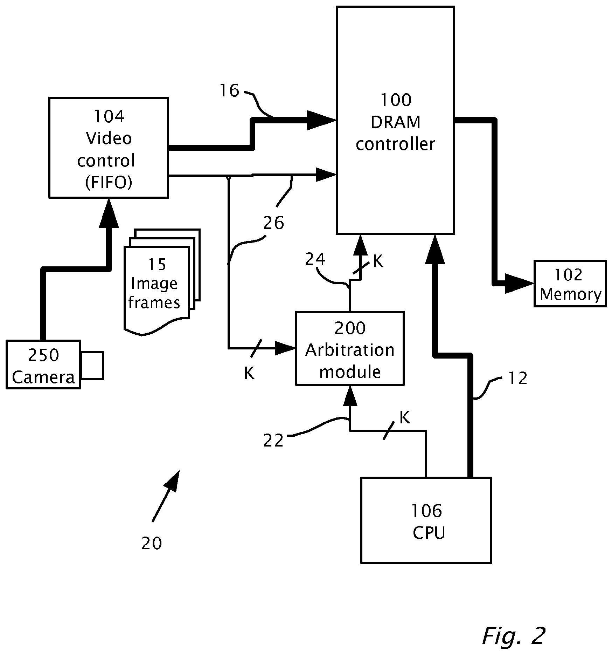

Reference is now made to Figure 2 which illustrates a system **20** for arbitrating memory access to main memory **102**, according to an embodiment of the present invention. System **20** is the same as system **10** but further includes an arbitration module **200.** System **20** includes central processing unit CPU **106** and peripheral device, *e.g*. video controller **104** and main memory **102** connected as in system **10.** In system **20**, video control unit **104** FIFO buffer receives image frames **15** in real time from camera **250.** During a memory write operation, data are transferred from the FIFO data buffer to dynamic random access memory (DRAM) controller **100** on data line **16.** DRAM controller **100** receives data from central processing unit (CPU) **106** on data line **12.** In system **20**, data lines are shown as thick black lines and control lines are shown by thinner black lines.

Arbitration module **200** is operatively attached to CPU **106** to receive priority control line **22** which is **K** bits wide. Priority control line **22** may alternatively receive a CPU priority level from another component (not shown) in system **20** other than CPU **106** or the CPU priority level on priority control line **22** may be set at a predetermined constant value without priority control line **22** as shown. Video controller **104** provides a priority control line **26** which is supplied to both DRAM controller **100** and arbitration module **200.**

Video control unit **104** priority level may be set as a discrete variable priority level according to the remaining capacity of peripheral **104 FIFO** buffer to store additional data.. For video control unit **104** FIFO buffer being empty a priority level of 0 may be set. For video control unit **104** FIFO buffer somewhat full a priority level of 1 may be set, which may be equal to that of other co-processors or accelerators not shown in system **20.** For a video control unit **104** FIFO buffer still fuller a priority level of 2 may be set which may be greater than that of the other co-processors but still below that of the priority level of CPU **106.** When control unit **104** FIFO buffer is nearly full, a priority level may be set of 3 (for **K**=2 bits) equal to the CPU priority level. Accordingly, arbitration unit **200** may provide a modified or new priority level on priority control line **24** for CPU **106** which is based on the priority level of peripheral **104.**

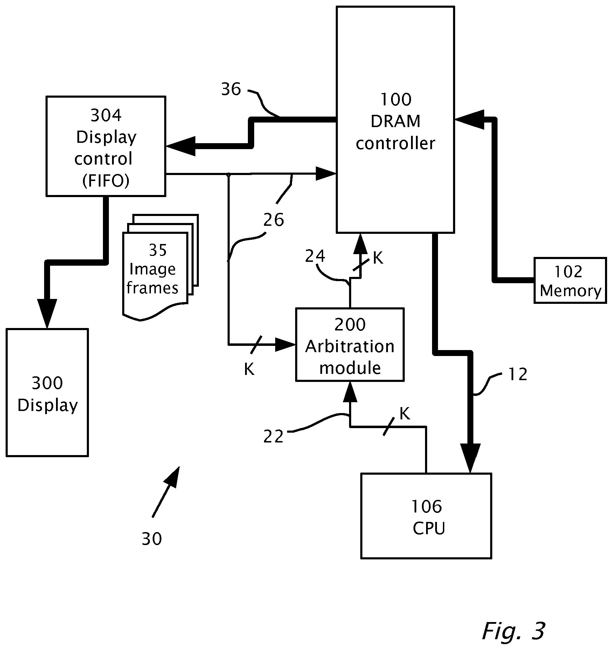

Reference is now also made to Figure 3 which illustrates a system **30** for arbitrating memory access to main memory **102**, according to an embodiment of the present invention. Display controller **304** reads data from memory **102** and provides image frames **35** to display **300.** System **30** shows data flow along data lines including data lines **36** and **12** where data may be read from main memory **102** respectively by display controller **304** and CPU **106.** Display controller **304** provides a priority control signal to DRAM controller **100** and to arbitration module **200** over control lines **26.** A priority control signal to arbitration module **200** may be provided over control line **22** from CPU **106** as shown. Priority control line **22** may alternatively receive a priority level from another component in system **30** or the priority level on priority control line **22** may be set at a constant value at arbitration module **200** without the need for priority control line **22.**

Arbitration unit **200** provides a modified priority output for CPU **106** on priority control line **24** which is based on the received priorities for reading data provided on priority control lines **22** and **26.**

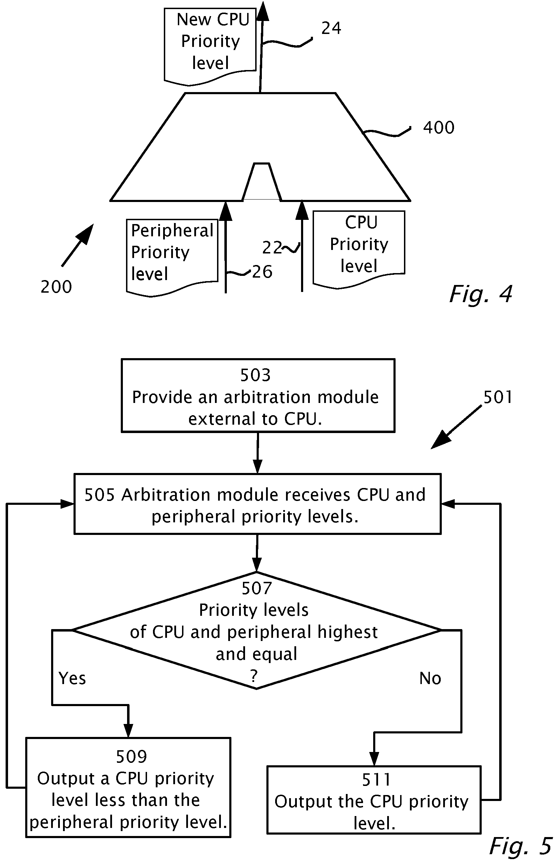

Reference is now made to Figure 4 which shows more details of arbitration module **200**, according to an embodiment of the present invention. Arbitration module **200** includes a logic module **400** which has two inputs from priority control lines **22** and **26.** If **K** is two bits then four possible priority levels (0-3) are available from CPU **106** on priority control line **22** and from video control **104** on priority control line **26.** In Figure 4, if (as shown) both priority control lines **22** and **26** carry CPU **106** priority level and peripheral **104** priority level respectively. If for example, CPU **106** priority level and peripheral **104** priority level are both set at a maximum priority of 3, then the new CPU priority level carried on priority control line **24** is reduced to 2. Priority control line **24** modifies the priority level of CPU **106** to the new priority level of CPU **106** when both data lines have a maximum priority of 3, otherwise new priority level is the same value as the CPU priority level on priority control line **22.**

Reference is now also made to Figure 5 which shows a method **501**, according to an embodiment of the present invention. In step **503**, arbitration module **200** is provided externally to CPU **106** because priority of memory access of CPU **106** may not be configurable based on signaling from peripheral devices **104**, **304.**

In step **505**, arbitration module **200** receives priority levels from CPU **106** and peripheral device **104**, **304** for instance on priority control lines **22** and **26** respectively.

In decision block **507**, if the priority levels of both CPU **106** and peripheral device **104**, **304** are both at a maximum (priority level 3 for K=2 bits), that is both have priority levels of 3, then the modified output on priority control line **24** is reduced to 2 in step **509**, so that CPU **106** priority level is less than the priority level (3) of video control **104.** If in decision **507**, the priority levels of both CPU **106** and peripheral device **104**, **304** are not at a maximum (priority level 3 for **K**=2 bits) then the modified output on priority control line **24** is the same value as the priority value on priority control line **22** in step **511.** After either step **509** or step **511**, step **505** continues, with arbitration module **200** receiving priority levels from CPU **106** and video control **104** on priority control lines **22** and **26** respectively.

Video control **104** may set its priority for memory access dependent on how full is FIFO data buffer. The more full the 'write' FIFO data register in video control **104**, the higher is the priority set by video control **104** on priority control line **26.** In the case of reading from main memory **102** (as shown in system **30**), display controller **304** priority level may be set depending on how empty a 'read' FIFO data register is in display controller **304.** The more empty the 'read' FIFO data register is in display controller **304**, the higher is the priority set by display controller **304** on priority control line **26.**

The indefinite articles "a", "an" is used herein, such as "a processor", has the meaning of "one or more" that is "one or more processors".

Although selected features of the preferred embodiments been shown and described, it is to be understood the present invention is not limited to the described features. Instead, it is to be appreciated that changes may be made to these features without departing from the teachings herein, the scope of which is defined by the claims.

## Claims

1. A system including:
a central processing unit CPU (106);
a peripheral device (104);
a memory controller (100) configured to arbitrate access to a main memory (102), wherein the CPU (106) and the peripheral device (104) operatively connect to said memory controller (100);
wherein access to and from the main memory (102) by the CPU (106) and access to and from the main memory (102) by the peripheral device (104) is prioritized respectively according to a CPU priority level and a peripheral device priority level;
an arbitration module (200) is operatively attached to the CPU (106), the peripheral device and the memory controller (100), wherein the arbitration module is configured to receive the peripheral device priority level; **characterised in that**:
the memory controller (100) is configured to receive the CPU priority level from the arbitration module (200) and to receive the peripheral device (104) priority level from the peripheral device; and
when the CPU priority level and the peripheral device priority level are both set at the highest available priority level, the arbitration module (200) is configured to output to the memory controller (100) a new CPU priority level less than the highest available priority level.

2. The system of claim 1, wherein the arbitration module (200) is configured to receive the CPU priority level and when the CPU priority level and the peripheral device priority level are set at different priority levels, the arbitration module (200) is configured to output to the memory controller (100), the new CPU priority level equal to the CPU priority level as received.

3. The system of claim 1 or 2, wherein the CPU priority level is a predetermined constant value equal to the highest available priority level.

4. The system of claim 1, 2 or 3, wherein said CPU priority level is settable by either said CPU (106) or a device external to said CPU (106).

5. The system of any preceding claim, wherein the arbitration module (200) is configured to receive the CPU priority level.

6. The system of any preceding claim, wherein said peripheral device priority level is settable by either said peripheral device (104) or a device external to the peripheral device.

7. The system of any preceding claim, wherein the peripheral device (104) is a video controller (104) operable to write streaming image data into the main memory (102).

8. The system of claim 7, wherein the video controller (104) includes a write buffer for temporary storage of the image data prior to writing the image data into the main memory (102), whereby the video controller (104) sets and outputs to the arbitration module the highest available priority level when the write buffer is substantially full, whereby the video controller (104) sets and outputs to the arbitration module a priority level less than the highest available priority level when the write buffer is less than substantially full.

9. The system of claim 7, wherein the video controller (104) includes a write buffer for temporary storage of the image data prior to writing the image data into the main memory (102) and wherein the priority level for the peripheral device may be set at a value proportional to the fullness of the write buffer.

10. The system of any preceding claim, wherein the peripheral device is a video controller operable to read streaming image data from the main memory (102).

11. The system of claim 10, wherein the video controller (104) includes a read buffer for temporary storage of the image data prior to outputting the image data read from the main memory (102), whereby the video controller (104) sets and outputs to the arbitration module the highest available priority level when the read buffer is substantially empty, whereby the video controller sets and outputs to the arbitration module (200) a priority level less than the highest available priority level when the read buffer is not substantially empty.

12. The system any preceding claim, wherein the peripheral device includes a read buffer for temporary storage of image data prior to outputting the image data read from the main memory (102) and wherein the priority level for the peripheral device is set at a value proportional to the emptiness of the read buffer.

13. A method of arbitrating memory access between a central processing unit CPU (106) and a peripheral device (104) to main memory (102), wherein the memory access to and from the main memory (102) by the CPU (106) and to and from the main memory (102) by the peripheral device is prioritized according to a CPU priority level and a peripheral device priority level, the method including the steps of:
providing an arbitration module (200) external to the CPU (106), the peripheral device (104) and the memory controller (100);
receiving by the arbitration module the peripheral device priority level from the peripheral device; **characterised by**
receiving by the memory controller (100) the CPU priority level from the arbitration module (200) and the peripheral device priority level from the peripheral device (104); and
when the CPU priority level and the peripheral device priority level are both set at the highest available priority level, outputting by the arbitration module to the memory controller (100) a new CPU priority level less than the highest available priority level.

14. The method of claim 13, including the step of:
setting the CPU priority level by either said CPU (106) or a device external to said CPU.

15. The method of claim 13 or 14, including the step of:
setting the peripheral device priority level by the peripheral device.

## Patentansprüche

1. System umfassend:
eine zentrale Verarbeitungseinheit CPU (106);
eine Peripherieeinrichtung (104);
eine Speichersteuerung (100), die konfiguriert ist, um den Zugriff auf einen Hauptspeicher (102) zu vermitteln, wobei die CPU (106) und die Peripherieeinrichtung (104) mit der Speichersteuerung (100) wirkverbunden sind;
wobei der Zugriff auf und von dem Hauptspeicher (102) durch die CPU (106) und der Zugriff auf und von dem Hauptspeicher (102) durch die Peripherieeinrichtung (104) entsprechend einer CPU-Prioritätsstufe und einer Prioritätsstufe der Peripherieeinrichtung priorisiert wird;
ein Schiedsmodul (200) an der CPU (106), der Peripherieeinrichtung und der Speichersteuerung (100) operativ angebracht ist, wobei das Schiedsmodul konfiguriert ist, um die Prioritätsstufe der Peripherieeinrichtung zu empfangen;
**dadurch gekennzeichnet, dass**:
die Speichersteuerung (100) konfiguriert ist, um die CPU-Prioritätsstufe von dem Schiedsmodul (200) zu empfangen und die Prioritätsstufe der Peripherieeinrichtung (104) von der Peripherieeinrichtung zu empfangen; und
wenn sowohl die CPU-Prioritätsstufe als auch die Prioritätsstufe der Peripherieeinrichtung auf die höchste verfügbare Prioritätsstufe gesetzt sind, das Schiedsmodul (200) konfiguriert ist, an die Speichersteuerung (100) eine neue CPU-Prioritätsstufe auszugeben, die kleiner als die höchste verfügbare Prioritätsstufe ist.

2. System nach Anspruch 1, wobei das Schiedsmodul (200) konfiguriert ist, um die CPU-Prioritätsstufe zu empfangen, und, wenn die CPU-Prioritätsstufe und die Prioritätsstufe der Peripherieeinrichtung auf unterschiedliche Prioritätsstufen gesetzt sind, das Schiedsmodul (200) konfiguriert ist, an die Speichersteuerung (100) die neue CPU-Prioritätsstufe gleich der CPU-Prioritätsstufe auszugeben ist, wie sie empfangen wurde.

3. System nach Anspruch 1 oder 2, wobei die CPU-Prioritätsstufe ein vorbestimmter konstanter Wert ist, der gleich der höchsten verfügbaren Prioritätsstufe ist.

4. System nach Anspruch 1, 2 oder 3, wobei die CPU-Prioritätsstufe entweder durch die CPU (106) oder eine Vorrichtung extern zur CPU (106) einstellbar ist.

5. System nach irgendeinem vorhergehenden Anspruch, wobei das Schiedsmodul (200) konfiguriert ist, um die CPU-Prioritätsstufe zu empfangen.

6. System nach irgendeinem vorhergehenden Anspruch, wobei die Prioritätsstufe der Peripherieeinrichtung entweder durch die Peripherieeinrichtung (104) oder eine Vorrichtung extern zur Peripherieeinrichtung einstellbar ist.

7. System nach irgendeinem vorhergehenden Anspruch, wobei die Peripherieeinrichtung (104) ein Video Controller (104) ist, der zum Schreiben von Streaming-Bilddaten in den Hauptspeicher (102) betreibbar ist.

8. System nach Anspruch 7, wobei der Video Controller (104) einen Schreibpuffer zur temporären Speicherung der Bilddaten vor dem Schreiben der Bilddaten in den Hauptspeicher (102) umfasst, wodurch der Video Controller (104) die höchste verfügbare Prioritätsstufe setzt und an das Schiedsmodul ausgibt, wenn der Schreibpuffer im Wesentlichen voll ist, wodurch der Video Controller (104) eine Prioritätsstufe setzt und an das Schiedsmodul ausgibt, die kleiner als die höchste verfügbare Prioritätsstufe ist, wenn der Schreibpuffer weniger als im Wesentlichen voll ist.

9. System nach Anspruch 7, wobei der Video Controller (104) einen Schreibpuffer zur temporären Speicherung der Bilddaten vor dem Schreiben der Bilddaten in den Hauptspeicher (102) umfasst und wobei die Prioritätsstufe für die Peripherieeinrichtung auf einen Wert gesetzt werden kann, der proportional zur Fülle des Schreibpuffers ist.

10. System nach irgendeinem vorhergehenden Anspruch, wobei die Peripherieeinrichtung ein Video Controller ist, die zum Lesen von Streaming-Bilddaten aus dem Hauptspeicher (102) betreibbar ist.

11. System nach Anspruch 10, wobei der Video Controller (104) einen Lesepuffer zur temporären Speicherung der Bilddaten vor dem Ausgeben der aus dem Hauptspeicher (102) gelesenen Bilddaten umfasst, wodurch der Video Controller (104) die höchste verfügbare Prioritätsstufe setzt und an das Schiedsmodul ausgibt, wenn der Lesepuffer im Wesentlichen leer ist, wodurch der Video Controller eine Prioritätsstufe setzt und an das Schiedsmodul (200) ausgibt, die kleiner als die höchste verfügbare Prioritätsstufe ist, wenn der Lesepuffer nicht im Wesentlichen leer ist.

12. System nach irgendeinem vorhergehenden Anspruch, wobei die Peripherieeinrichtung einen Lesepuffer zur temporären Speicherung von Bilddaten vor der Ausgabe der aus dem Hauptspeicher (102) gelesenen Bilddaten umfasst und wobei die Prioritätsstufe für die Peripherieeinrichtung auf einen Wert eingestellt wird, der proportional zur Leere des Lesepuffers ist.

13. Verfahren zum Vermitteln des Speicherzugriffs zwischen einer zentralen Verarbeitungseinheit CPU (106) und einer Peripherieeinrichtung (104) auf den Hauptspeicher (102), wobei der Speicherzugriff auf und von dem Hauptspeicher (102) durch die CPU (106) und auf und von dem Hauptspeicher (102) durch die Peripherieeinrichtung gemäß einer CPU-Prioritätsstufe und einer Prioritätsstufe einer Peripherieeinrichtung priorisiert wird, wobei das Verfahren die folgenden Schritte umfasst:
Bereitstellen eines Schiedsmoduls (200) extern zu der CPU (106), der Peripherieeinrichtung (104) und der Speichersteuerung (100);
Empfangen der Prioritätsstufe der Peripherieeinrichtung von der Peripherieeinrichtung durch das Schiedsmodul;
**gekennzeichnet durch**
Empfangen durch die Speichersteuerung (100) der CPU-Prioritätsstufe vom Schiedsmodul (200) und der Prioritätsstufe der Peripherieeinrichtung von der Peripherieeinrichtung (104); und
wenn sowohl die CPU-Prioritätsstufe als auch die Prioritätsstufe der Peripherieeinrichtung auf die höchste verfügbare Prioritätsstufe gesetzt sind, Ausgeben durch das Schiedsmodul an die Speichersteuerung (100) einer neuen CPU-Prioritätsstufe, die kleiner als die höchste verfügbare Prioritätsstufe ist.

14. Verfahren nach Anspruch 13, umfassend den Schritt eines:
Einstellens der CPU-Prioritätsstufe entweder durch die CPU (106) oder eine Vorrichtung extern zur CPU.

15. Verfahren nach Anspruch 13 oder 14, umfassend den Schritt eines:
Einstellens der Prioritätsstufe für die Peripherieeinrichtung durch die Peripherieeinrichtung.

## Revendications

1. Système comprenant :
une unité centrale de traitement, CPU, (106) ;
un dispositif périphérique (104) ;
un dispositif de commande de mémoire (100) configuré pour arbitrer un accès à une mémoire principale (102), la CPU (106) et le dispositif périphérique (104) se connectant de manière fonctionnelle audit dispositif de commande de mémoire (100) ;
dans lequel un accès vers et depuis la mémoire principale (102) par la CPU (106) et un accès vers et depuis la mémoire principale (102) par le dispositif périphérique (104) sont priorisés respectivement selon un niveau de priorité de CPU et un niveau de priorité de dispositif périphérique ;
un module d'arbitrage (200) est fixé de manière fonctionnelle à la CPU (106), au dispositif périphérique et au dispositif de commande de mémoire (100), le module d'arbitrage étant configuré pour recevoir le niveau de priorité de dispositif périphérique ; **caractérisé par le fait que** :
le dispositif de commande de mémoire (100) est configuré pour recevoir le niveau de priorité de CPU à partir du module d'arbitrage (200) et pour recevoir le niveau de priorité de dispositif périphérique (104) à partir du dispositif périphérique ; et
lorsque le niveau de priorité de CPU et le niveau de priorité de dispositif périphérique sont tous les deux réglés au niveau de priorité le plus élevé disponible, le module d'arbitrage (200) est configuré pour délivrer au dispositif de commande de mémoire (100) un nouveau niveau de priorité de CPU inférieur au niveau de priorité le plus élevé disponible.

2. Système selon la revendication 1, dans lequel le module d'arbitrage (200) est configuré pour recevoir le niveau de priorité de CPU et lorsque le niveau de priorité de CPU et le niveau de priorité de dispositif périphérique sont réglés à des niveaux de priorité différents, le module d'arbitrage (200) est configuré pour délivrer au dispositif de commande de mémoire (100) le nouveau niveau de priorité de CPU égal au niveau de priorité de CPU tel que reçu.

3. Système selon la revendication 1 ou 2, dans lequel le niveau de priorité de CPU est une valeur constante prédéterminée égale au niveau de priorité le plus élevé disponible.

4. Système selon la revendication 1, 2 ou 3, dans lequel ledit niveau de priorité de CPU peut être réglé soit par ladite CPU (106), soit par un dispositif externe à ladite CPU (106).

5. Système selon l'une quelconque des revendications précédentes, dans lequel le module d'arbitrage (200) est configuré pour recevoir le niveau de priorité de CPU.

6. Système selon l'une quelconque des revendications précédentes, dans lequel ledit niveau de priorité de dispositif périphérique peut être réglé soit par ledit dispositif périphérique (104), soit par un dispositif externe au dispositif périphérique.

7. Système selon l'une quelconque des revendications précédentes, dans lequel le dispositif périphérique (104) est un dispositif de commande de vidéo (104) fonctionnel pour écrire des données d'image de diffusion en continu dans la mémoire principale (102).

8. Système selon la revendication 7, dans lequel le dispositif de commande de vidéo (104) comprend une mémoire tampon d'écriture pour un stockage temporaire des données d'image avant l'écriture des données d'image dans la mémoire principale (102), moyennant quoi le dispositif de commande de vidéo (104) règle et délivre au module d'arbitrage le niveau de priorité le plus élevé disponible lorsque la mémoire tampon d'écriture est sensiblement pleine, moyennant quoi le dispositif de commande de vidéo (104) règle et délivre au module d'arbitrage un niveau de priorité inférieur au niveau de priorité le plus élevé disponible lorsque la mémoire tampon d'écriture est moins que sensiblement pleine.

9. Système selon la revendication 7, dans lequel le dispositif de commande de vidéo (104) comprend une mémoire tampon d'écriture pour un stockage temporaire des données d'image avant l'écriture des données d'image dans la mémoire principale (102) et dans lequel le niveau de priorité pour le dispositif périphérique peut être réglé à une valeur proportionnelle au caractère plein de la mémoire tampon d'écriture.

10. Système selon l'une quelconque des revendications précédentes, dans lequel le dispositif périphérique est un dispositif de commande de vidéo (104) fonctionnel pour lire des données d'image de diffusion en continu provenant de la mémoire principale (102).

11. Système selon la revendication 10, dans lequel le dispositif de commande de vidéo (104) comprend une mémoire tampon de lecture pour un stockage temporaire des données d'image avant la délivrance des données d'image lues à partir de la mémoire principale (102), moyennant quoi le dispositif de commande de vidéo (104) règle et délivre au module d'arbitrage le niveau de priorité le plus élevé disponible lorsque la mémoire tampon de lecture est sensiblement vide, moyennant quoi le dispositif de commande de vidéo (104) règle et délivre au module d'arbitrage (200) un niveau de priorité inférieur au niveau de priorité le plus élevé disponible lorsque la mémoire tampon de lecture n'est pas sensiblement vide.

12. Système selon l'une quelconque des revendications précédentes, dans lequel le dispositif périphérique comprend une mémoire tampon de lecture pour un stockage temporaire de données d'image avant la délivrance des données d'image lues à partir de la mémoire principale (102) et dans lequel le niveau de priorité pour le dispositif périphérique est réglé à une valeur proportionnelle au caractère vide de la mémoire tampon de lecture.

13. Procédé d'arbitrage d'un accès mémoire entre une unité centrale de traitement, CPU, (106) et un dispositif périphérique (104) à une mémoire principale (102), dans lequel l'accès mémoire vers et depuis la mémoire principale (102) par la CPU (106) et vers et depuis la mémoire principale (102) par le dispositif périphérique est priorisé selon un niveau de priorité de CPU et un niveau de priorité de dispositif périphérique, le procédé comprenant les étapes suivantes :
fournir un module d'arbitrage (200) externe à la CPU (106), au dispositif périphérique (104) et au dispositif de commande de mémoire (100);
recevoir par le module d'arbitrage le niveau de priorité de dispositif périphérique à partir du dispositif périphérique; **caractérisé par**
recevoir par le dispositif de commande de mémoire (100) le niveau de priorité de CPU à partir du module d'arbitrage (200) et le niveau de priorité de dispositif périphérique à partir du dispositif périphérique (104) ; et
lorsque le niveau de priorité de CPU et le niveau de priorité de dispositif périphérique sont tous les deux réglés au niveau de priorité le plus élevé disponible, délivrer par le module d'arbitrage au dispositif de commande de mémoire (100) un nouveau niveau de priorité de CPU inférieur au niveau de priorité le plus élevé disponible.

14. Procédé selon la revendication 13, comprenant l'étape suivante :
régler le niveau de priorité de CPU soit par ladite CPU (106), soit par un dispositif externe à ladite CPU.

15. Procédé selon la revendication 13 ou 14, comprenant l'étape suivante :
régler le niveau de priorité de dispositif périphérique par le dispositif périphérique.
